# EUROPEAN PATENT APPLICATION

(11) **EP 3 882 833 A1**
(43) Date of publication of application: **22.09.2021**
(21) Application number: 21162473.9
(22) Date of filing: 15.03.2021
(51) Int. Cl.: G06Q 10/06, G06Q 50/30, G06Q 30/02, G06Q 40/06, G06Q 40/00

(54) **ENVIRONMENT CONTRIBUTION EFFECT REPORT GENERATION APPARATUS**

(30) Priority: 17.03.2020 JP 2020046085
(71) Applicant: Hitachi, Ltd., Tokyo 100-8280 (JP)
(72) Inventor: KOBAYASHI, Hideyuki, Tokyo, 100-8280 (JP); FUKUMOTO, Takashi, Tokyo, 100-8280 (JP)
(74) Representative: MERH-IP Matias Erny Reichl Hoffmann Patentanwälte PartG mbB

(57) **Abstract**

An environment contribution effect report generation apparatus for generating a report on an environment contribution effect produced by introduction of a facility includes: an environmental load intensity acquisition unit configured to identify and acquire an amount of environmental load caused in generating energy used by the facility per unit amount and evidence information on the amount of environmental load, from a history of energy usage by the facility; and an environment contribution effect report generation unit configured to calculate an environment contribution effect from an environmental load intensity and an amount of energy used by the facility and to generate a report containing the environment contribution effect and the evidence information.

## Description

### BACKGROUND OF THE INVENTION

### 1. Field of the Invention

The present invention relates to an environment contribution effect report generation apparatus.

### 2. Description of the Related Art

Financial products such as a green bond and a green loan have recently been increased. In the financial products, the use of funds is restricted to projects with high environment contribution effects. The framework of a financial product is as follows. An investor (e.g., a pension fund, an insurance company, a financial institution, a private investor) finances a green bond issuer (e.g., a business firm, a financial institution, a municipality) with funds via an arranger (e.g., a securities company). The green bond issuer invests in an environmental improvement project special purpose company (SPC). The green bond issuer carries out environmental improvement projects such as utilization of renewable energy, construction and renovation of energy-saving buildings, recycling of wastes, contaminated soil treatment, preservation of biodiversity, sustainable transportation management, and water resource management.

In order to promote the investment effectively and smoothly, it is necessary to invigorate the investment by making effects of the investment clear for the investor. An external reviewer (e.g., an audit firm, a certification authority) provides an external review (e.g., confirmation of effects of environmental improvement by an investee of the raised funds, a business entity in which the investment is made, etc.). The green bond issuer makes a report (an environment contribution effect report) given with the external review.

The financial product obliges the green bond issuer to make a report on environment contribution effects of the invested projects for the investor. The environment contribution effect report requires an audit by an audit firm, a certification authority, or the like before the green bond issuer issues the environment contribution effect report to the investor.

In making the report based on the audit, the projects include a solar power generation project, a renewable energy introduction project in a factory, a financing project for an electric vehicle (EV) purchaser, and others. In practice, a method of calculating an environment contribution effect differs for each project. Hence, it is necessary to make an accurate environment contribution effect report by collecting data completely as much as possible from relevant sites.

JP 2010-098794 A discloses a known system for collecting various kinds of data from multiple sites relevant to an amount of environmental load. However, this technique has no bearing on the data collection concerning the environment contribution effect report. According to JP 2010-098794 A, provided is an energy supply system capable of grasping a cost, environmental load, and consumed primary energy in a case where power from a plurality of power generation sources is consumed. The energy supply system is provided as a remote monitoring control system including: a vehicle; a facility having a garage in and from which the vehicle comes and leaves; and a remote monitoring control center located away from the facility. The vehicle, the facility, and the remote monitoring control center are capable of establishing communications with one another. The vehicle includes: a vehicle-side charge and discharge unit configured to charge and discharge power; a power load unit configured to consume power charged in the vehicle-side charge and discharge unit; a vehicle-side connection unit electrically connectable to the facility disposed outside; and a running drive unit configured to output a running drive force. Power is supplied from the facility to the vehicle-side charge and discharge unit via the vehicle-side connection unit, and is charged in the vehicle-side charge and discharge unit. The running drive unit uses, as the running drive force, energy obtained in such a manner that a motor as the power load unit consumes power. The vehicle also includes: a vehicle-side storage unit configured to store vehicle-side charge information on an amount of power for each power generation source, with regard to the power charged in the vehicle-side charge and discharge unit; and a vehicle-side charge and discharge control unit configured to control charge and discharge operation of the vehicle-side charge and discharge unit and configured to update the vehicle-side charge information stored in the vehicle-side storage unit, by referring to information on a power generation source that generates power to be charged and discharged when the power is charged in the vehicle-side charge and discharge unit and when the power is discharged from the vehicle-side charge and discharge unit. The facility includes: a facility-side connection unit electrically connectable to the vehicle-side connection unit of the vehicle; a heat and electricity supply device configured to generate heat and electricity by consuming fuel; a natural energy power generation device configured to use natural energy as an energy source; a power load device configured to receive power from at least one of the heat and electricity supply device, the natural energy power generation device, a commercial power system, or the vehicle-side charge and discharge unit; a heat load device configured to receive heat from the heat and electricity supply device; and a facility-side control unit configured to control operation of the heat and electricity supply device in accordance with a control command received from the remote monitoring control center. In order to minimize environmental load in supplying power to the power load device and in supplying heat to the heat load device, in order to minimize a cost, or in order to minimize primary energy, the remote monitoring control center prepares optimum operating plans for the vehicle-side charge and discharge unit, heat and electricity supply device, natural energy power generation device, and commercial power system. The remote monitoring control center transmits, to the facility, a control command for the heat and electricity supply device. The remote monitoring control center transmits, to the vehicle, a discharge control command for the vehicle-side charge and discharge unit to the facility and a charge control command for the vehicle-side charge and discharge unit from the facility.

### SUMMARY OF THE INVENTION

The technique disclosed in JP 2010-098794 A produces an effect for grasping and managing an amount of environmental load to a certain degree. According to this technique, it is possible to grasp a cost, environmental load, and consumed primary energy in a case where power from a plurality of power generation sources is consumed. It is also possible to previously acquire carbon dioxide emissions per kWh of electricity produced for each power generation source (i.e., a carbon dioxide emission factor), to make a charging plan based on the information, and to charge a vehicle based on the information. It is also possible to manage, as an actual charging record, an amount of environmental load.

However, a report generated based on data collected by this method is inappropriate to a report for an investor and an audit of the report, to which the present invention is directed, since this technique takes no information on the grounds of data for generating the report into consideration.

A green bond issuer carries out various environmental improvement projects. In a case of an environment contribution effect produced by a financing project for an EV purchaser, the environment contribution effect is prepared in accordance with the preconditions, calculation methods, and calculation formulas specified in the green bond guidelines of Ministry of the Environment. Specifically, with regard to an environment contribution effect produced by a financing project for an EV purchaser, it is necessary to calculate a value by calculating an amount of carbon dioxide emission from the EV, based on an annual traveled distance, power consumption of the EV, and a carbon dioxide emission factor of power, and comparing this amount with an amount of carbon dioxide emission from an existing gasoline vehicle.

A carbon dioxide emission factor of power to be employed in this calculation method is an average value of all power sources in a place of a business firm that purchased EVs. In practice, such a value differs depending on a power generation source (e.g., solar power: 0.05 kg-CO₂/kWh, thermal power: 0.7 kg-CO₂/kWh). In practice, this calculation method is therefore incapable of calculating an accurate environment contribution effect.

As described above, a report for an investor and an audit of the report require information on the grounds of data for generating the report. In this respect, the system disclosed in JP 2010-098794 A employs no evidence information on the grounds of a carbon dioxide emission factor (e.g., information on a power retailing plan, a number of an environment certificate in cases where it is used); therefore, data to be handled in the system is low in transparency. As a result, the system is not applicable to a report for an investor and an audit of the report, to which the present invention is directed.

In view of the circumstances described above, the present invention provides an environment contribution effect report generation apparatus for generating a report on an environment contribution effect produced by introduction of a facility, the environment contribution effect report generation apparatus including: an environmental load intensity acquisition unit configured to identify and acquire an amount of environmental load caused in generating energy used by the facility per unit amount and evidence information on the amount of environmental load, from a history of energy usage by the facility; and an environment contribution effect report generation unit configured to calculate an environment contribution effect from an environmental load intensity and an amount of energy used by the facility and to generate a report containing the environment contribution effect and the evidence information.

The present invention also provides an environment contribution effect report generation apparatus for generating a report on an environment contribution effect produced by introduction of an EV, the environment contribution effect report generation apparatus including: an environmental load intensity acquisition unit configured to identify and acquire an amount of environmental load caused in generating electricity used by the EV per unit amount and evidence information on the amount of environmental load, from a charging history of the EV; and an environment contribution effect report generation unit configured to calculate an environment contribution effect from an environmental load intensity and a charge amount of the EV and to generate a report containing the environment contribution effect and the evidence information.

The present invention also provides an environment contribution effect report generation apparatus for generating a report on an environment contribution effect produced by introduction of an EV, the environment contribution effect report generation apparatus including: means for identifying, based on information about when and where the EV is charged, a carbon dioxide emission factor of charged electricity and evidence information; means for calculating an amount of environmental load caused by the charge, from the carbon dioxide emission factor and an amount of the charged electricity; means for calculating an environment contribution effect produced by the introduction of the EV, from a difference between the amount of environmental load caused by the charge and an amount of environmental load caused by use of a gasoline vehicle; and means for generating an environment report containing the environment contribution effect and the evidence information.

An environment contribution effect report generation apparatus according to the present invention is capable of generating a highly-reliable report as an environment contribution effect report.

### BRIEF DESCRIPTION OF THE DRAWINGS

Fig. 1 illustrates interested parties involved in an environment contribution effect report generation apparatus 1 according to a first embodiment of the present invention and the details of facilities owned by the respective interested parties;
Fig. 2 illustrates the details of data stored in a storage device DB1 of a computer system 1 of a green bond issuer 2;
Fig. 3 schematically illustrates the details of processing to be executed by a central processing unit (CPU) CPU1 of the computer system 1 of the green bond issuer 2;
Fig. 4 illustrates the details of an investment-related facility list D11 stored in a storage device DB11 of the green bond issuer 2;
Fig. 5 illustrates the details of a power retailing contract plan D12 stored in a storage device DB12 of the green bond issuer 2;
Fig. 6 illustrates the details of a traveling history D31 stored in a storage device DB31 of an EV manufacturer 4;
Fig. 7 illustrates the details of a charging history D32 stored in a storage device DB32 of the EV manufacturer 4;
Fig. 8 illustrates the details of carbon dioxide emissions intensity and evidence information D71 stored in a storage device DB71 of a charging spot provider 8;
Fig. 9 illustrates the details of carbon dioxide emissions intensity and evidence information D91 stored in a storage device DB91 of a retail electric utility 10;
Fig. 10 illustrates examples of data held by the respective interested parties on a network and the details of schematic processing to be executed by the green bond issuer 2;
Fig. 11 illustrates the details of processing step S190X in a processing flow illustrated in Fig. 10;
Fig. 12 illustrates an exemplary environment contribution effect report prepared in accordance with the first embodiment;
Fig. 13 illustrates a system configuration in a case where the green bond issuer 2 outsources preparation of an environment contribution effect report to a report preparation support company 99;
Fig. 14 illustrates interested parties involved in an environment contribution effect report generation apparatus 1 according to a second embodiment of the present invention and the details of facilities owned by the respective interested parties;
Fig. 15 schematically illustrates the details of processing to be executed by a CPU CPU1 of a computer system 1 of a green bond issuer 2 in the second embodiment;
Fig. 16 illustrates a processing flow of generating an environment contribution effect report according to the second embodiment;
Fig. 17 illustrates the details of carbon dioxide emissions intensity and evidence information D71 stored in a storage device DB71 of a charging spot provider 8 according to a third embodiment;
Fig. 18 illustrates the details of carbon dioxide emissions intensity and evidence information D91 stored in a storage device DB91 of a retail electric utility 10 according to the third embodiment; and
Fig. 19 illustrates an exemplary environment contribution effect report prepared in accordance with the third embodiment.

### DESCRIPTION OF THE PREFERRED EMBODIMENTS

Embodiments of the present invention will be described below with reference to the drawings.

A green bond issuer carries out various environmental improvement projects. An exemplary embodiment of the present invention is directed to an environment contribution effect to be produced by a financing project for an EV purchaser. As a matter of course, the present invention is also applicable to other typical environmental improvement projects.

### First embodiment

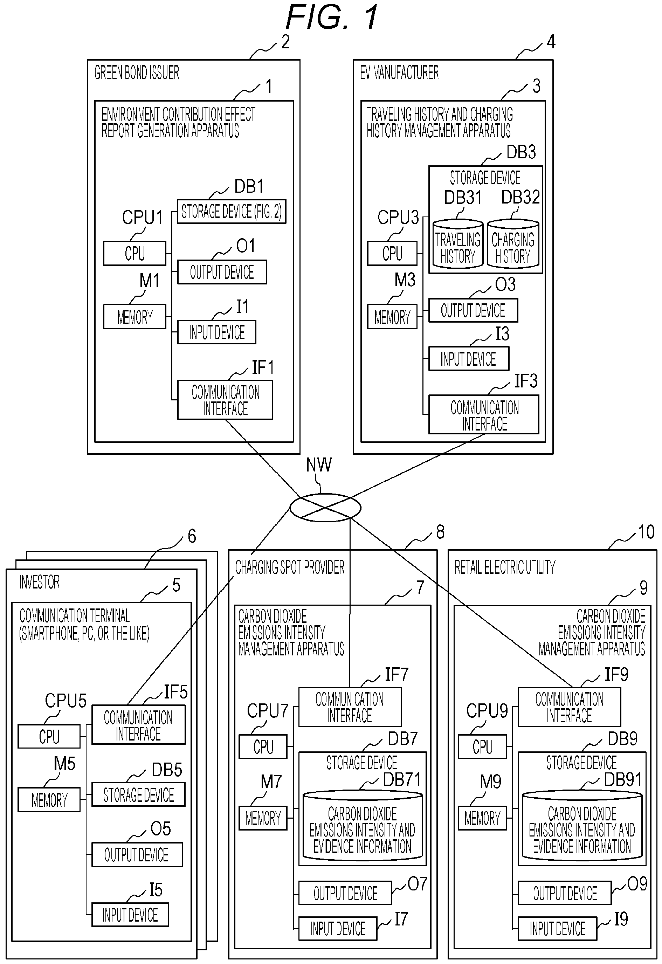

Fig. 1 illustrates interested parties involved in an environment contribution effect report generation apparatus 1 according to a first embodiment of the present invention and the details of facilities owned by the respective interested parties. As illustrated in Fig. 1, the interested parties are an investor 6, a green bond issuer 2, an EV manufacturer 4 as an environmental improvement project SPC (a project operator), a retail electric utility 10 as a data provider, and a charging spot provider 8 as a data provider.

These interested parties have the following relationship. The investor 6 finances the green bond issuer 2 with funds. The green bond issuer 2 invests in an EV sales promotion project of the EV manufacturer 4. The green bond issuer 2 receives data from the EV manufacturer 4, the retail electric utility 10 as a data provider, and the charging spot provider 8 as a data provider to make an environment contribution effect report. The green bond issuer 2 submits the environment contribution effect report to the investor 6. The green bond issuer 2 utilizes evidence information in order to make a highly-reliable environment contribution effect report.

Each interested party (2, 4, 6, 8, 10) has a computer system (1, 3, 5, 7, 9) including a CPU (CPU1, CPU3, CPU5, CPU7, CPU9), a memory (M1, M3, M5, M7, M9), a storage device (DB1, DB3, DB5, DB7, DB9), an input device (II, 13, 15, 17, 19), an output device (O1, O3, O5, O7, O9), and a communication interface (IF1, IF3, IF5, IF7, IF9). The computer systems (1, 3, 5, 7, 9) of the interested parties are connected over a network NW through the communication interfaces (IF1, IF3, IF5, IF7, IF9).

The storage device DB3 of the EV manufacturer 4 stores a traveling history D31 and a charging history D32 of an EV, as data unique to the EV manufacturer 4. The storage device DB9 of the retail electric utility 10 stores carbon dioxide emissions intensity and evidence information D91, as data unique to the retail electric utility 10. The storage device DB7 of the charging spot provider 8 stores carbon dioxide emissions intensity and evidence information D71, as data unique to the charging spot provider 8. The computer systems 3, 7, and 9 transmit the data to the computer system 1 of the green bond issuer 2 through the communication interfaces IF3, IF7, and IF9 over the network NW.

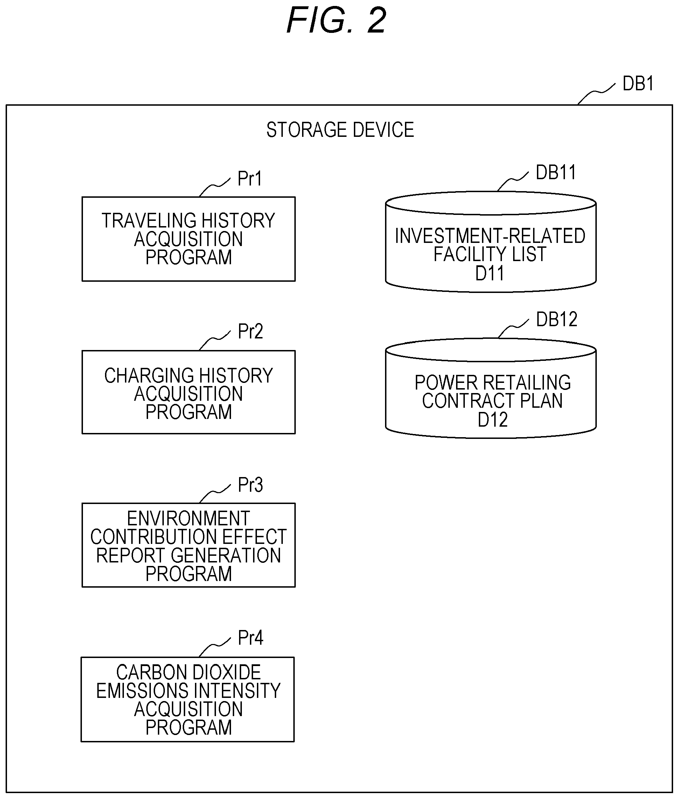

Fig. 2 illustrates the details of data stored in the storage device DB1 of the computer system 1 of the green bond issuer 2. As illustrated in Fig. 2, the storage device DB1 of the computer system 1 of the green bond issuer 2 stores a traveling history acquisition program Pr1, a charging history acquisition program Pr2, an environment contribution effect report generation program Pr3, and a carbon dioxide emissions intensity acquisition program Pr4 each of which is to be executed by the CPU CPU1. The storage device DB1 includes a storage device DB11 and a storage device DB12. The storage device DB11 previously stores an investment-related facility list D11. The storage device DB12 previously stores a power retailing contract plan D12.

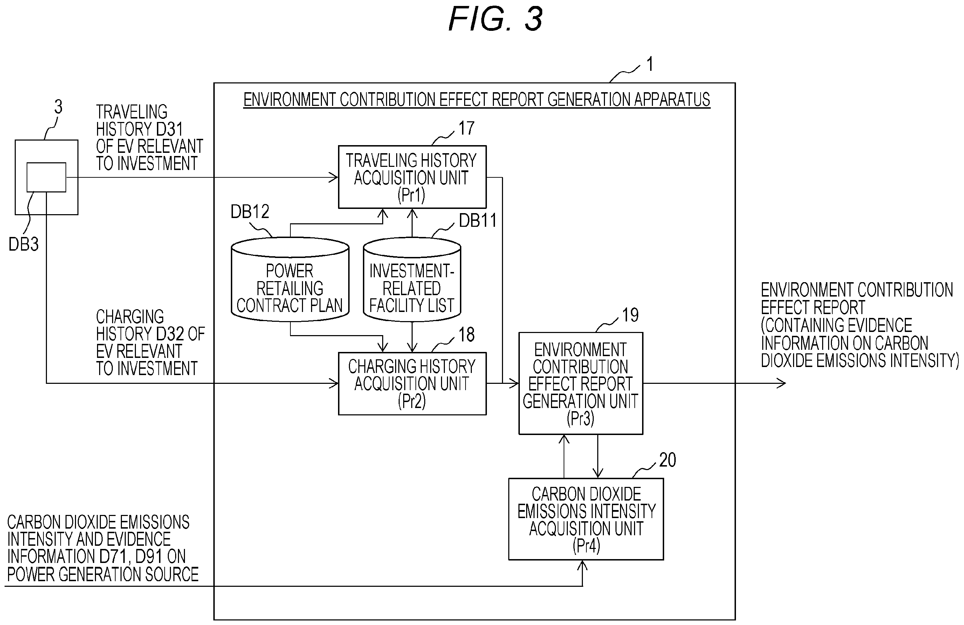

Fig. 3 schematically illustrates the details of processing to be executed by the CPU CPU1 of the computer system 1 of the green bond issuer 2. As illustrated in Fig. 3, a traveling history acquisition unit 17 executes the traveling history acquisition program Pr1 to acquire the traveling history D31 of the EV relevant to the investment from a storage device DB31 of the computer system 3. A charging history acquisition unit 18 executes the charging history acquisition program Pr2 to acquire the charging history D32 of the EV relevant to the investment from a storage device DB32 of the computer system 3. A carbon dioxide emissions intensity acquisition unit 20 executes the carbon dioxide emissions intensity acquisition program Pr4 to acquire the carbon dioxide emissions intensity and evidence information D71 of the power generation source from a storage device DB71 of the computer system 7 and also acquire the carbon dioxide emissions intensity and evidence information D91 of the power generation source from a storage device DB91 of the computer system 9.

In the processing by the traveling history acquisition unit 17 and charging history acquisition unit 18, the CPU CPU1 accesses the storage device DB11 storing the investment-related facility list D11 and the storage device DB12 storing the power retailing contract plan D12 to grasp the traveling history, the charging history, and the power retailing contract for each vehicle as an investment-related facility. An environment contribution effect report generation unit 19 executes the environment contribution effect report generation program Pr3 to generate an environment contribution effect report. The environment contribution effect report generation unit 19 generates a highly-reliable environment contribution effect report containing evidence information of a carbon dioxide emissions intensity.

In the example illustrated in Fig. 1, the traveling history acquisition unit 17 transmits a list of identification (ID) codes for uniquely identifying EVs introduced based on funds raised by a green bond, to the EV manufacturer 4 to acquire traveling histories of the respective EVs. The charging history acquisition unit 18 transmits the list of the ID codes for uniquely identifying the EVs introduced based on the funds raised by the green bond, to the EV manufacturer 4 to acquire charging histories of the respective EVs. The environment contribution effect report generation unit 19 generates a report on an environment contribution effect produced by the EVs introduced based on the funds raised by the green bond. The carbon dioxide emissions intensity acquisition unit 20 is a functional unit configured to acquire a carbon dioxide emissions intensity and evidence information of the carbon dioxide emissions intensity with regard to a certain power generation source. The evidence information is, for example, the power retailing contract plan D12. In a case where an environment certificate is used, the evidence information is, for example, a certificate number of the environment certificate and link information on the environment certificate.

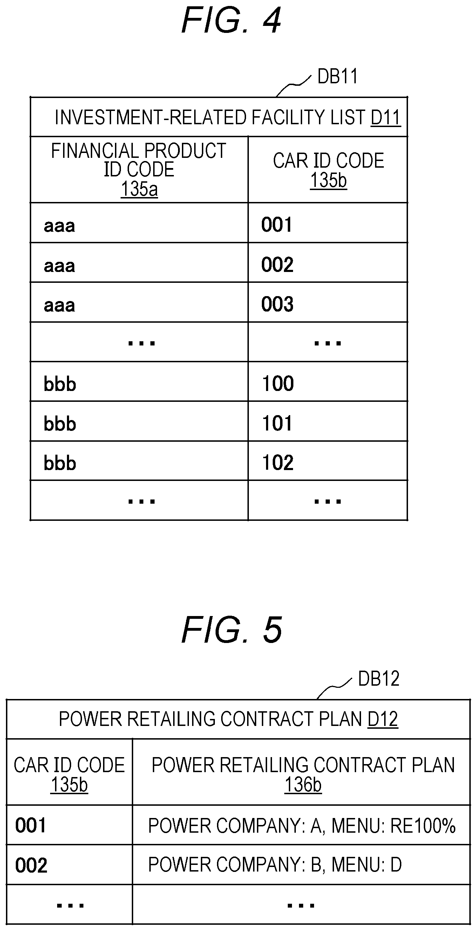

With reference to Figs. 4 to 9, next, a specific description will be given of the details of the data stored in each storage device.

Fig. 4 illustrates the details of the investment-related facility list D11 stored in the storage device DB11 of the green bond issuer 2. As illustrated in Fig. 4, the investment-related facility list D11 is the list of the ID codes for uniquely identifying the EVs introduced based on the funds raised by the green bond. A car ID code (135b) is given for each financial product ID code (135a). In the example illustrated in Fig. 4, a financial product "aaa" is given with car ID codes "001", "002", and "003". A financial product "bbb" is given with car ID codes "100", "101", and "102". The following exemplary description concerns an EV given with a car ID code "001". As a matter of course, the same things may hold true for other EVs.

Fig. 5 illustrates the details of the power retailing contract plan D12 stored in the storage device DB12 of the green bond issuer 2. As illustrated in Fig. 5, the power retailing contract plan D12 is a database managing information on a plan of a contract between an owner of each EV and the retail electric utility 10. In the example illustrated in Fig. 5, the data in the storage device DB11 is associated with the data in the storage device DB12 with the car ID codes (135b). A power retailing contract plan D12 (136b) about the EV given with the car ID code "001" includes "power company: A, menu: RE100%". A power retailing contract plan D12 (136b) about the EV given with the car ID code "002" includes "power company: B, menu: D".

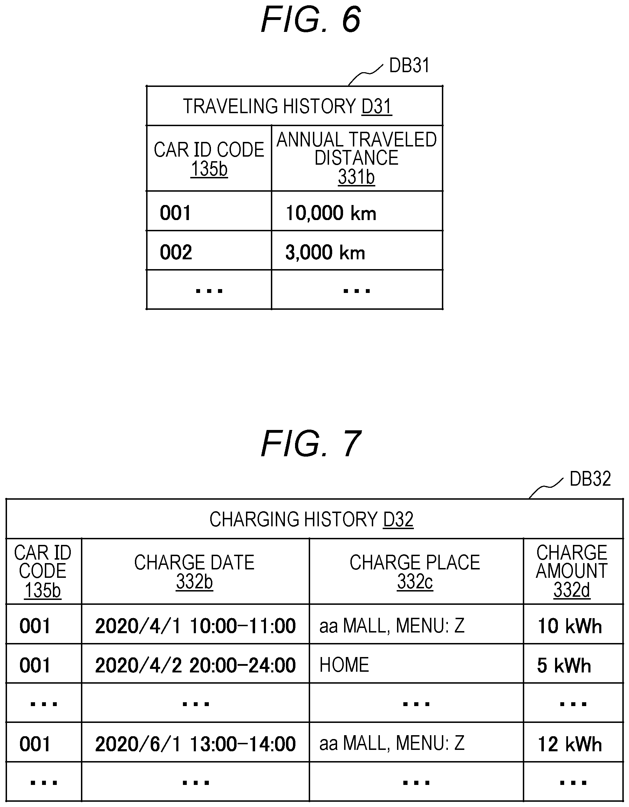

Fig. 6 illustrates the details of the traveling history D31 stored in the storage device DB31 of the EV manufacturer 4. As illustrated in Fig. 6, the traveling history D31 includes a traveling history of each EV. In the example illustrated in Fig. 6, the data in the storage device DB11 and the data in the storage device DB12 are associated with the data in the storage device DB31 with the car ID codes (135b). An annual traveled distance 331b of the EV given with the car ID code "001" is 10000 km. An annual traveled distance 331b of the EV given with the car ID code "002" is 3000 km.

Fig. 7 illustrates the details of the charging history D32 stored in the storage device DB32 of the EV manufacturer 4. As illustrated in Fig. 7, the charging history D32 includes a charging history of each EV. In the example illustrated in Fig. 7, the data in the storage device DB11, the data in the storage device DB12, and the data in the storage device DB31 are associated with the data in the storage device DB32 with the car ID codes (135b). The charging history D32 indicates a charge date 332b, a charge place 332c, and a charge amount 332d. For example, a charging history of the EV given with the car ID code "001" indicates that the EV was charged in an amount of 10 kWh in an "aa" mall (menu: Z) between the hours of 10:00 and 11:00 on April 1, 2020. In addition, the EV was charged in an amount of 5 kWh at home between the hours of 20:00 and 24:00 on April 2, 2020. The charge date, the charge place, and the charge amount are recorded and accumulated as the charging history.

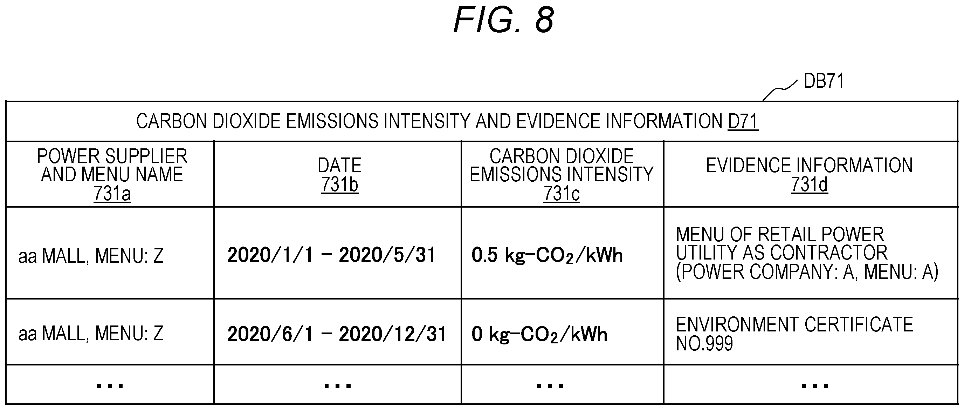

Fig. 8 illustrates the details of the carbon dioxide emissions intensity and evidence information D71 stored in the storage device DB71 of the charging spot provider 8. The carbon dioxide emissions intensity and evidence information D71 indicates a power supplier and menu name 731a, a date 731b, a carbon dioxide emissions intensity 731c, and evidence information 731d. The carbon dioxide emissions intensity 731c refers to information on a value of a carbon dioxide emissions intensity of electricity which a power supplier indicated by the power supplier and menu name 731a supplied at a date indicated by the date 731b in accordance with a menu indicated by the power supplier and menu name 731a. The evidence information 731d refers to information serving as an evidence of the carbon dioxide emissions intensity 731c. The evidence information 731d is, for example, a power contract menu. In a case where an environment certificate is used for an offset, the evidence information 731d is a number for uniquely identifying the environment certificate.

For example, with regard to the "aa" mall (menu: Z), a carbon dioxide emissions intensity 731c is 0.5 kg-CO₂/kWh for half a year from January 1, 2020 to May 31, 2020, and evidence information 731d is a menu of a retail power utility as a contractor (power company: A, menu: A). Likewise, a carbon dioxide emissions intensity 731c is 0 kg-CO₂/kWh for half a year from June 1, 2020 to December 31, 2020, and evidence information 731d is an environment certificate No. 999. Examples of the environment certificate may include, but not limited to, a green energy certificate, the J-Credit, and a non-fossil value certificate.

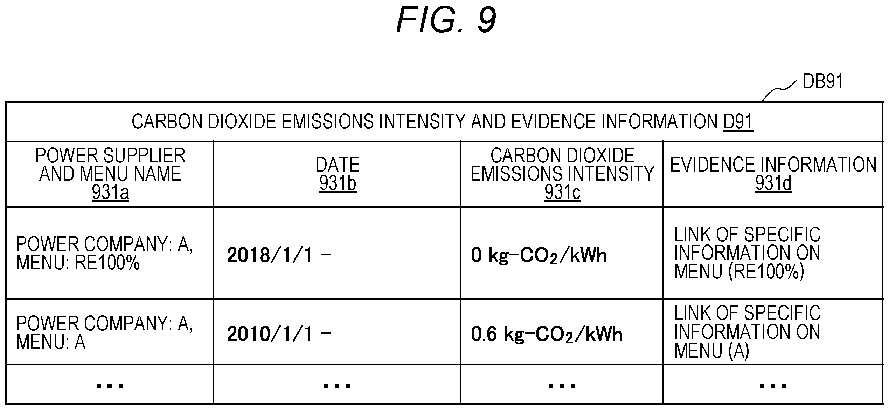

Fig. 9 illustrates the details of the carbon dioxide emissions intensity and evidence information D91 stored in the storage device DB91 of the retail electric utility 10. The details of the carbon dioxide emissions intensity and evidence information D91 are equal to those of the carbon dioxide emissions intensity and evidence information D71; therefore, the description thereof is different only in reference signs from the description on the details of the carbon dioxide emissions intensity and evidence information D71.

For example, with regard to the power company A (menu: RE100%), a carbon dioxide emissions intensity 931c is 0 kg-CO₂/kWh on January 1, 2018, and evidence information 931d is a link of specific information on the menu (RE100%). Likewise, a carbon dioxide emissions intensity 931c is 0.6 kg-CO₂/kWh on January 1, 2010, and evidence information 931d is a link of specific information on the menu (A).

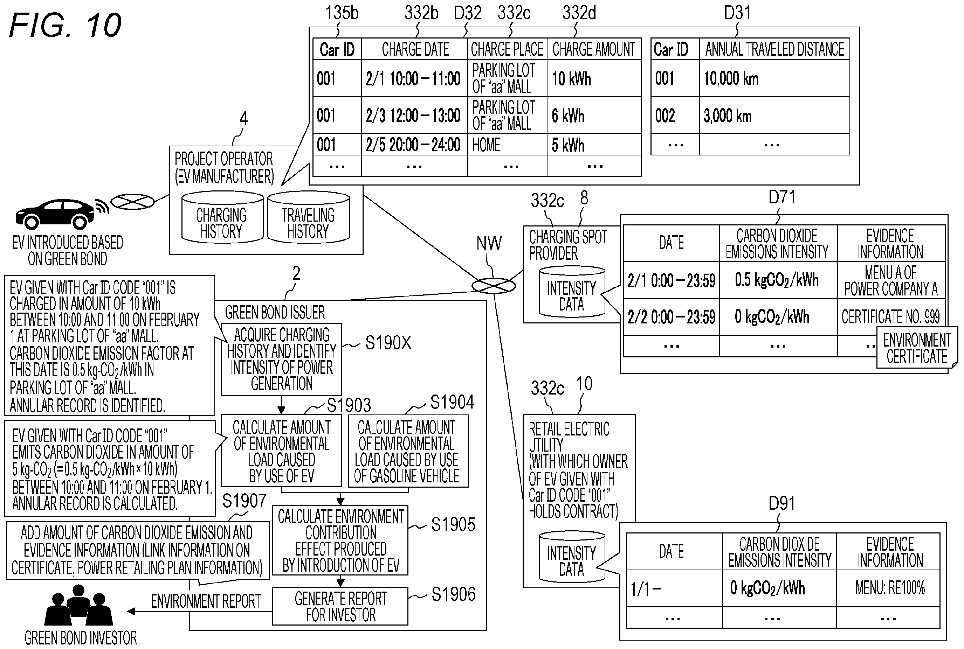

In this way, the green bond issuer 2 is capable of obtaining the pieces of data D31, D32, D71, and D91 from the respective interested parties via the network NW at appropriate timing. Fig. 10 illustrates examples of data held by the respective interested parties on the network NW and the details of schematic processing to be executed by the green bond issuer 2. As is clear from Fig. 10, the green bond issuer 2 is capable of obtaining the traveling history D31 and the charging history D32 each associated with the car ID code (135b) held by the EV manufacturer 4 as a project operator. The green bond issuer 2 is also capable of identifying the charging spot provider 8 and the retail electric utility 10 with the traveling history D31 and the charge place 332c in the charging history D32 used as indexes to obtain the carbon dioxide emissions intensity and evidence information D71 and the carbon dioxide emissions intensity and evidence information D91. The information items thus obtained are associated with one another; therefore, the green bond issuer 2 is capable of making a report based on the information items.

Using the information items, the green bond issuer 2 acquires the charging history D32 in processing step S190X to identify the intensity of power generation. It is however assumed herein that the intensity is not acquired. As to a site where the intensity data cannot be traced, an average value of power sources in the relevant region is utilized as in the current calculation method.

In the example illustrated in Fig. 10, more specifically, referring to the car ID code "001" (135b) in the charging history D32, the charge date (332b) is between 10:00 and 11:00 on February 1, the charge place (332c) is the parking lot of the "aa" mall, and the charge amount (332d) is 10 kWh. In this case, referring to the carbon dioxide emissions intensity and evidence information D71 with the charge place (332c) of "the parking lot of the "aa" mall" used as key information, the carbon dioxide emission factor at this date is 0.5 kg-CO₂/kWh. This enables transverse grasp of one relevant usage situation. By the similar method, the foregoing identification is made on the EV given with the car ID code "001" (135b) for one year, and the annual actual record is calculated by addition.

Processing step S1903 involves calculating an amount of environmental load caused by the use of an EV. In the example illustrated in Fig. 10, more specifically, the EV given with the car ID code "001" emits carbon dioxide in an amount of 5 kg-CO₂ (= 0.5 kg-CO₂/kWh × 10 kWh) between 10:00 and 11:00 on February 1. The annular amount of environmental load is calculated based on this calculation. The amount of environmental load is obtained as a product of the charge amount (332d) and the carbon dioxide emissions intensity.

Processing step S1904 involves calculating an amount of environmental load caused by the use of a gasoline vehicle. This calculation is made in accordance with the preconditions, calculation methods, and calculation formulas specified in the green bond guidelines of Ministry of the Environment.

Processing step S1905 involves calculating an environment contribution effect produced by the introduction of the EV, as a difference between the amount of environmental load calculated in processing step S1903 and the amount of environmental load calculated in processing step S1904. Processing step S1906 involves generating a report for an investor. This report contains the amount of carbon dioxide emission and the evidence information (the link information on the environment certificate, the power retailing plan information). The report is submitted to a green bond investor.

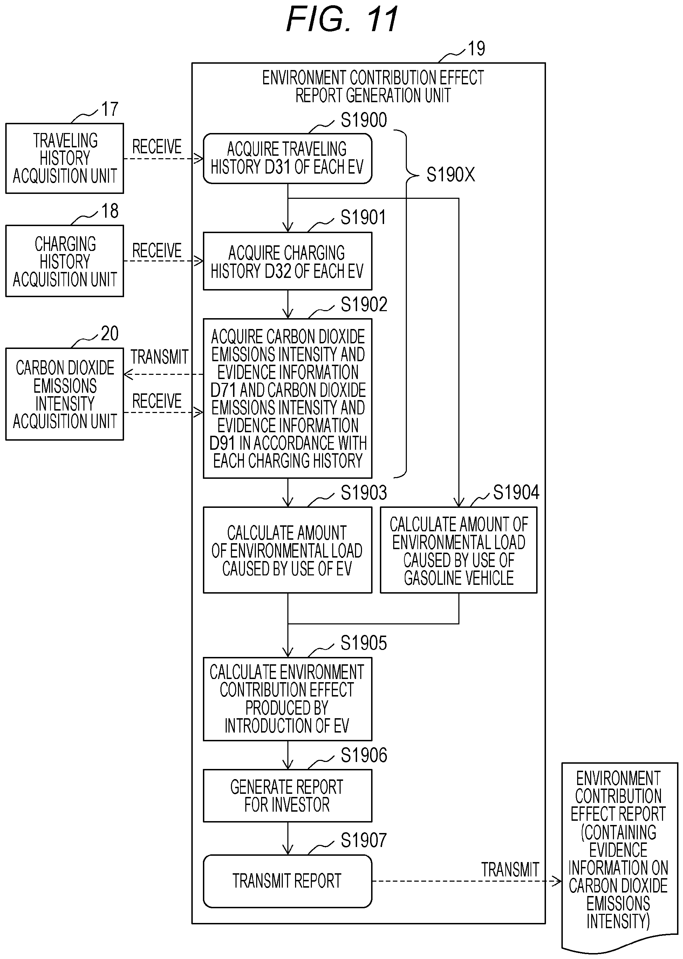

Fig. 11 illustrates the detail of processing step S190X in the processing flow illustrated in Fig. 10. In processing step S1900, the traveling history acquisition unit 17 acquires a traveling history D31 of each EV. In processing step S1901, the charging history acquisition unit 18 acquires a charging history D32 of each EV. In processing step S1902, the carbon dioxide emissions intensity acquisition unit 20 acquires carbon dioxide emissions intensity and evidence information D71 and carbon dioxide emissions intensity and evidence information D91, based on the charging history D32 of each EV.

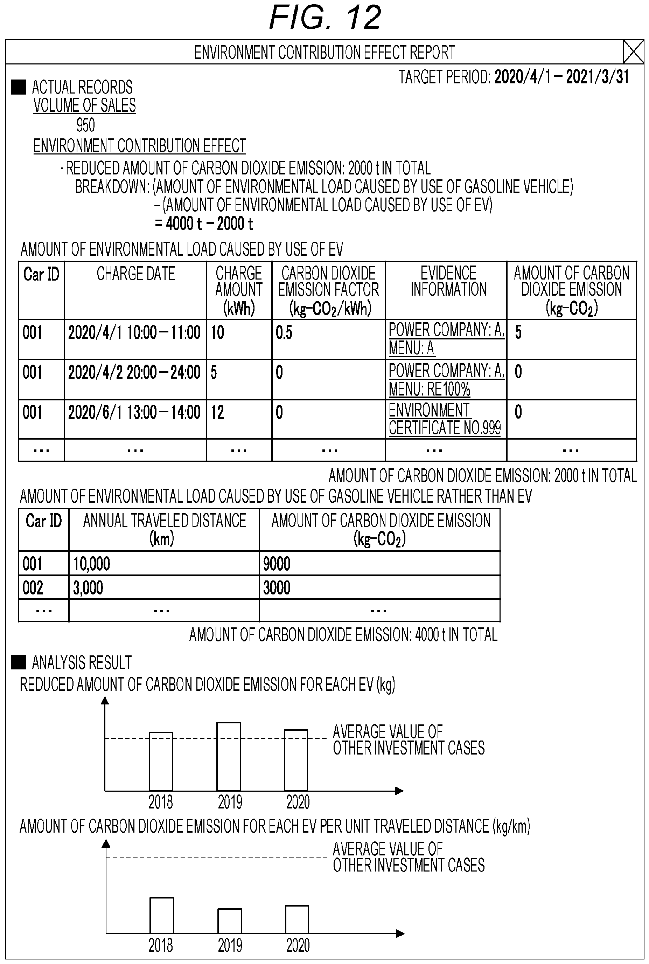

Fig. 12 illustrates an exemplary environment contribution effect report prepared in accordance with the first embodiment. The environment contribution effect report preferably describes materials which an investor utilizes for decision about a next investment. For example, the environment contribution effect report preferably allows the investor to sort on companies as the owners of the EVs so as to determine, for example, which company's business performance improves or falls off, which case achieves a high degree of reduction effectiveness, and what kind of case frequently uses a certificate.

From this point of view, preferably, the environment contribution effect report illustrated in Fig. 12 describes actual records and analysis results separately. With regard to the actual records, the environment contribution effect report describes a volume of sales of EVs which the EV manufacturer 4 as a green bond project operator sold based on the financed green bond, and an environment contribution effect produced by the sales of the EVs. The environment contribution effect is described as the different between the amount of environmental load caused by the use of the EV, the amount being calculated in processing step S1903 illustrated in Fig. 11 and the amount of environmental load caused by the use of the gasoline vehicle, the amount being calculated in processing step S1904 illustrated in Fig. 11. In a case where a target value is set in advance for the amount of environmental load, preferably, the environment contribution effect report describes the target value in addition to the amount of environmental load.

As to the respective amounts of environmental load, the environment contribution effect report describes data as the grounds. With regard to the amount of environmental load caused by the use of the EV, the environment contribution effect report describes data as the grounds, such as a car ID code, a charge date, a charge amount, a carbon dioxide emissions intensity, evidence information, and an amount of carbon dioxide emission. The present invention has a feature in that an environment contribution effect report contains evidence information which further increases the reliability of the environment contribution effect report. The evidence information 731d serves as the evidence of the carbon dioxide emissions intensity 731c. The evidence information 731d is, for example, a power contract menu. In a case where an environment certificate is used for an offset, preferably, the environment contribution effect report describes, for example, a number that uniquely identifies the environment certificate. In a case where the environment contribution effect report is prepared in the form of electronic information, preferably, clicking linked evidence information 731d directs an investor to specific information on a menu that is on public view by a power company or a captured image of an environment certificate.

With regard to the analysis results, preferably, the environment contribution effect report describes a reduced amount (kg) of carbon dioxide emission for each EV and an amount (kg/km) of carbon dioxide emission for each EV per unit traveled distance, every fiscal year. The reduced amount (kg) of carbon dioxide emission for each EV particularly allows an investor to compare a trend shift with another similar investment case as to an effect of reduction in carbon dioxide emission. In addition, the amount (kg/km) of carbon dioxide emission for each EV per unit traveled distance allows an investor to compare a trend shift with another similar investment case as to how much the EV was charged in an eco-friendly manner.

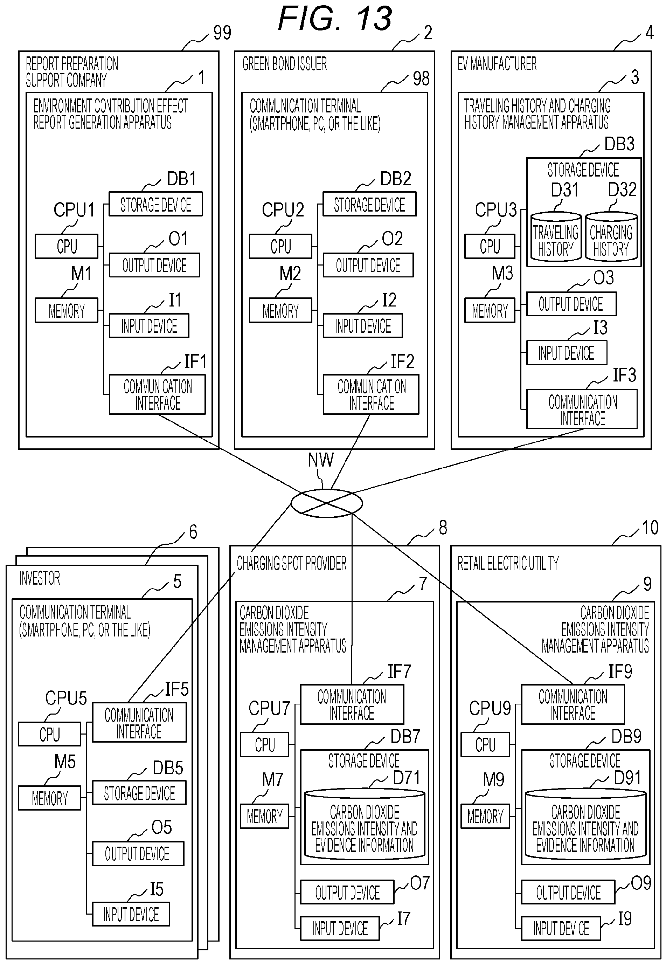

In the first embodiment, as illustrated in Fig. 1, the green bond issuer 2 makes an environment contribution effect report, using the environment contribution effect report generation apparatus 1. Fig. 13 illustrates a system configuration in a case where the green bond issuer 2 outsources preparation of an environment contribution effect report to a report preparation support company 99. In the first embodiment, the report preparation support company 99 is, for example, a manufacturer of this system. With this configuration, the green bond issuer 2 may use a communication terminal 98 such as a personal computer or a smartphone instead of the environment contribution effect report generation apparatus 1.

The idea of applying the present invention to an EV is conceived from an idea of, based on information about when and where an EV was charged, identifying a carbon dioxide emission factor of electricity and evidence information on the carbon dioxide emission factor, calculating an amount of environmental load caused by charge, from the carbon dioxide emission factor and a charge amount of the electricity, calculating an environment contribution effect produced by introduction of the EV, from a difference between the amount of environmental load caused by the charge and an amount of environmental load caused by the use of a gasoline vehicle, and submitting the environment contribution effect and the evidence information in the format of an environment report.

### Second embodiment

A second embodiment is directed to an environment contribution effect report generation apparatus that adopts a carbon offset. A description will be given of a system configuration in which a green bond issuer 2 purchases an environment certificate equivalent to an amount of environmental load caused by use of an EV to offset an amount of carbon dioxide emission (i.e., an amount of carbon dioxide emission is regarded as 0 kg) in making an environment contribution effect report. The environment contribution effect report describes information on the purchased environment certificate as evidence information.

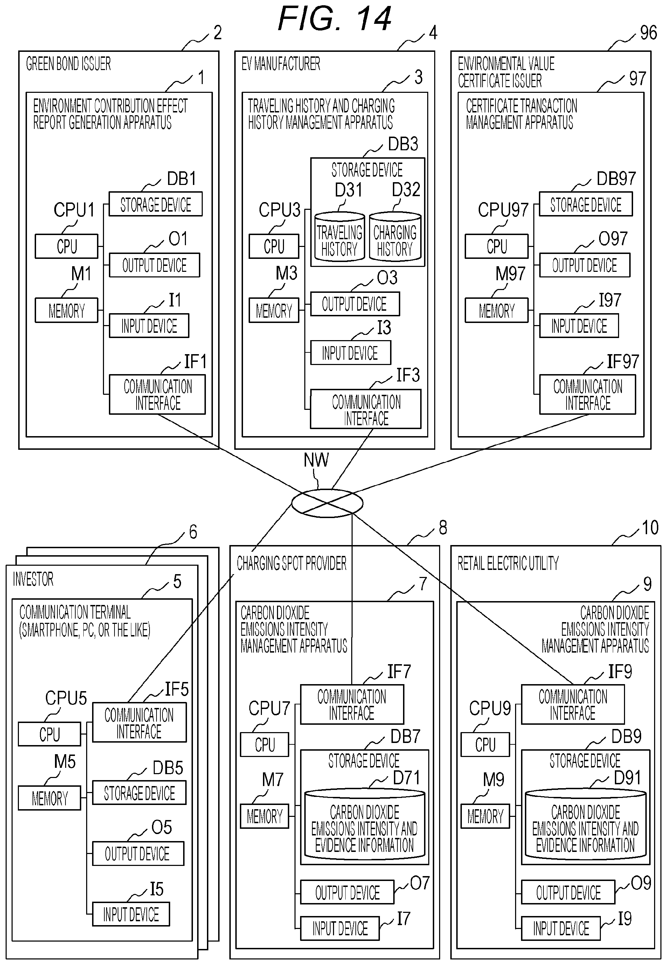

Fig. 14 illustrates interested parties involved in an environment contribution effect report generation apparatus 1 according to a second embodiment of the present invention and the details of facilities owned by the respective interested parties. The second embodiment is different from the first embodiment in the following respect. In the second embodiment, an environmental value certificate issuer 96 additionally joins in the interested parties illustrated in Fig. 1. The environmental value certificate issuer 96 has a computer system (a certificate transaction management apparatus 97) connected to the computer systems of the other interested parties over a network NW. A certificate to be traded in the second embodiment is a "carbon offset certificate". A storage device DB97 stores a carbon offset certificate D97.

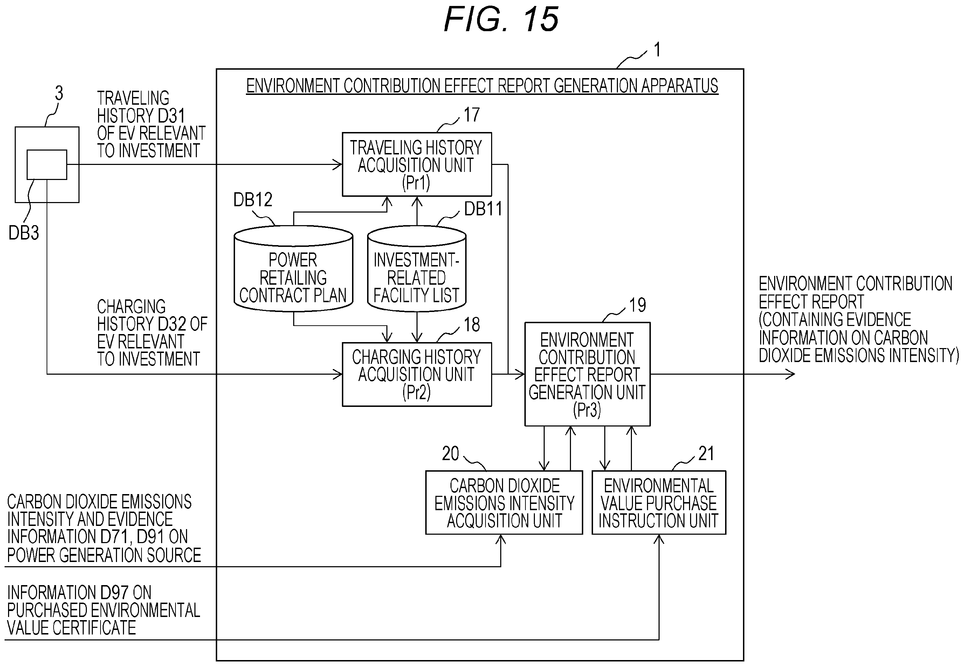

Fig. 15 schematically illustrates the details of processing to be executed by a CPU CPU1 of the computer system 1 of the green bond issuer 2 in the second embodiment. The configuration according to the second embodiment illustrated in Fig. 15 is different from the configuration according to the first embodiment illustrated in Fig. 3 in the following respect. In the second embodiment, the computer system 1 additionally includes an environmental value purchase instruction unit 21. The computer system 1 accesses the certificate transaction management apparatus 97 to acquire information on the carbon offset certificate D97 (i.e., information on the purchased environmental value certificate). The computer system 1 uses this information for processing in an environment contribution effect report generation unit 19.

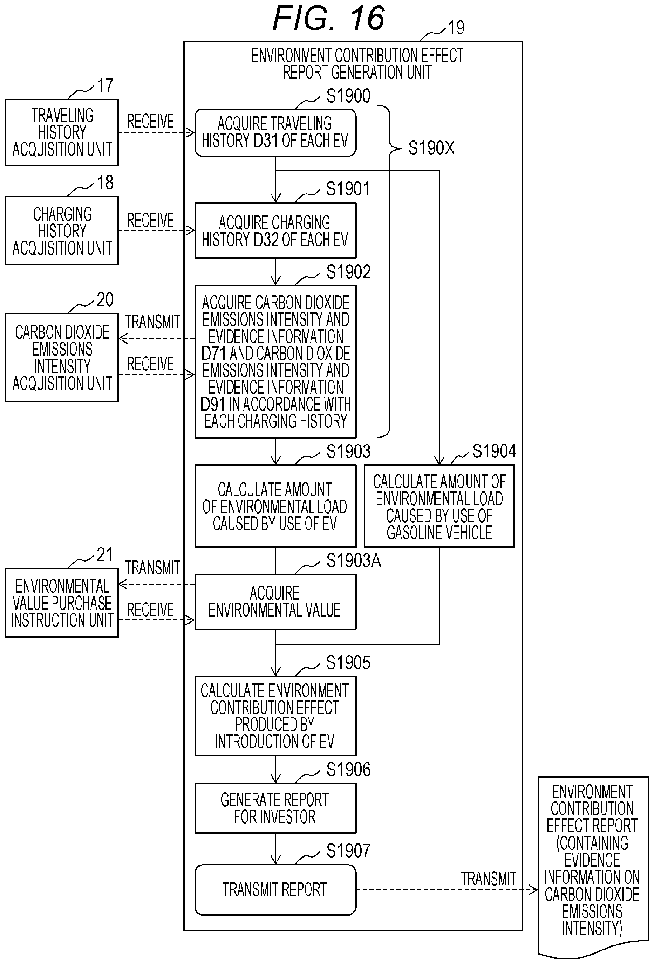

Fig. 16 illustrates a processing flow of generating an environment contribution effect report according to the second embodiment. As compared with the processing flow according to the first embodiment illustrated in Fig. 11, this processing flow additionally includes processing step S1903A. In processing step S1903A, the environmental value purchase instruction unit 21 acquires an offset volume based on the carbon offset certificate D97. In the second embodiment, the environmental value purchase instruction unit 21 receives an amount of environmental value required, from the environment contribution effect report generation unit 19, provides an instruction to purchase environmental value by the received amount, and thus receives information on the purchased environmental value.

Therefore, in a case where the annual amount of carbon dioxide emission from the EV given with the car ID code "001", the annual amount being calculated as the amount of environmental load caused by the use of the EV in processing step S1903, is 5000 kg, and the offset volume based on the environment certificate acquired in processing step S1903A is also 5000 kg, the environment contribution effect report generation unit 19 offsets the amount of carbon dioxide emission (i.e., regards the amount of carbon dioxide emission as 0 kg) in generating an environment contribution effect report. However, the environment contribution effect report explicitly describes the offset with the acquired environment certificate appended to the environment contribution effect report.

### Third embodiment

Some investors think that the use of nuclear power-derived electricity and a carbon offset based on an environment certificate are not desirable. Such investors tend to think that the information provision according to the first embodiment is insufficient. Hence, a third embodiment proposes that a source of charging electricity (a power supply configuration) is traced, and the information is explicitly described in an environment contribution effect report.

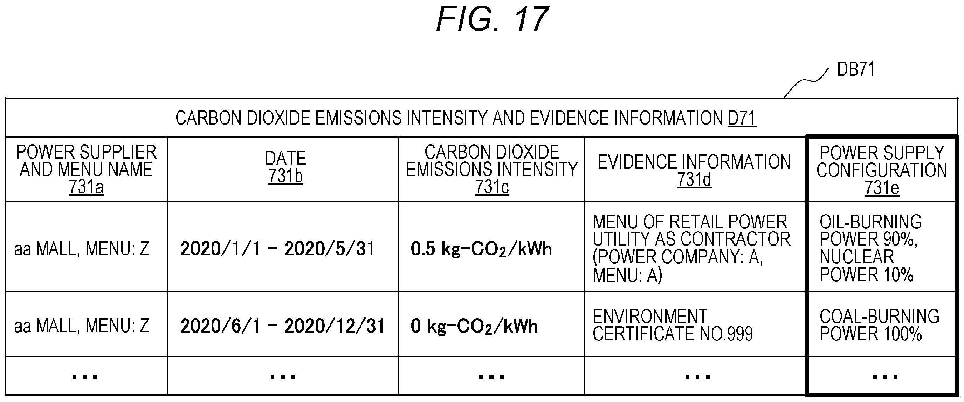

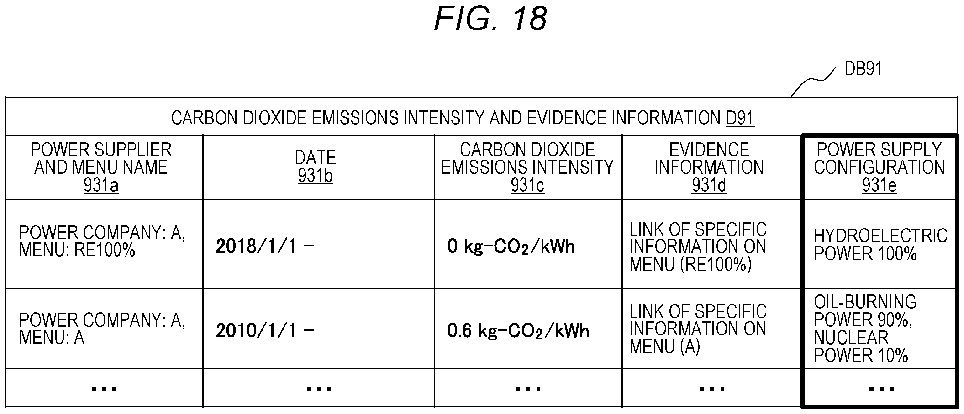

Therefore, the third embodiment is basically equal in system configuration to the first embodiment or the second embodiment except that carbon dioxide emissions intensity and evidence information D71 stored in a storage device DB7 of a charging spot provider 8 contains power supply configuration information 731e illustrated in Fig. 17, and carbon dioxide emissions intensity and evidence information D91 stored in a storage device DB9 of a retail electric utility 10 contains power supply configuration information 931e as illustrated in Fig. 18. For example, this information contains a ratio of power supply configurations (e.g., oil-burning power generation: 90%, nuclear power generation: 10%).

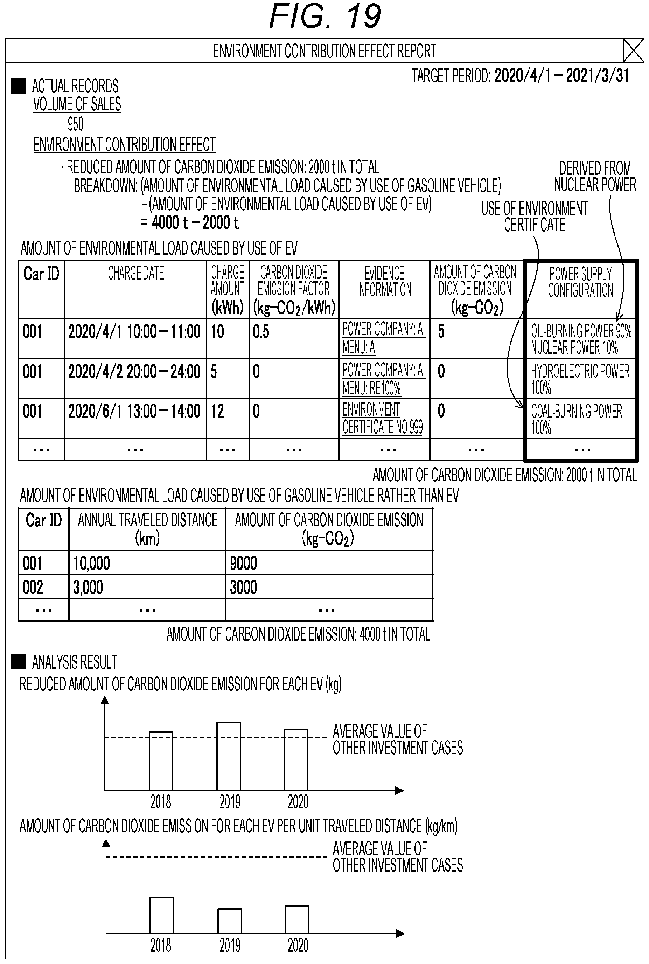

Fig. 19 illustrates an exemplary environment contribution effect report prepared in accordance with the third embodiment. The environment contribution effect report illustrated in Fig. 19 is different in description about an amount of environmental load caused by the use of an EV from the environment contribution effect report prepared in accordance with the first embodiment illustrated in Fig. 12. Moreover, the environment contribution effect report illustrated in Fig. 19 additionally describes a power supply configuration. In a case where a power supply configuration is derived from nuclear power or an environment certificate is used, the environment contribution effect report describes the fact as a legend. In the environment contribution effect report, a record corresponding to such a fact is, for example, highlighted. Preferably, the details of the legend are decided through discussions with investors prior to preparation of an environment contribution effect report.

The foregoing embodiments of the present invention are directed to an environment contribution effect to be produced by a financing project for an EV purchaser. As a matter of course, the present invention is also applicable to other typical environmental improvement projects.

In this case, the present invention generally provides an environment contribution effect report generation apparatus 1 for generating a report on an environment contribution effect produced by introduction of a facility, the environment contribution effect report generation apparatus 1 including: an environmental load intensity acquisition unit 20 configured to identify and acquire an amount of environmental load caused in generating energy used by the facility per unit amount and evidence information on the amount of environmental load, from a history of energy usage by the facility; and an environment contribution effect report generation unit 19 configured to calculate an environment contribution effect from an environmental load intensity and an amount of energy used by the facility and to generate a report containing the environment contribution effect and the evidence information.

## Claims

1. An environment contribution effect report generation apparatus for generating a report on an environment contribution effect produced by introduction of a facility,
the environment contribution effect report generation apparatus comprising:
an environmental load intensity acquisition unit (20) configured to identify and acquire an amount of environmental load caused in generating energy used by the facility per unit amount and evidence information (D71, D91, 731d, 931d) on the amount of environmental load, from a history of energy usage by the facility; and
an environment contribution effect report generation unit (19) configured to calculate an environment contribution effect from an environmental load intensity and an amount of energy used by the facility and to generate a report containing the environment contribution effect and the evidence information (D71, D91, 731d, 931d).

2. The environment contribution effect report generation apparatus according to claim 1, wherein
environmental value is purchased, and the amount of environmental load is corrected based on the purchased environmental value.

3. The environment contribution effect report generation apparatus according to claim 2, wherein
the environmental value is acquired together with evidence information (D71, D91, 731d, 931d) on the environmental value.

4. The environment contribution effect report generation apparatus according to claim 1, wherein
the report describes the amount of environmental load caused by the introduced facility, the evidence information (D71, D91, 731d, 931d) on the amount of environmental load, and a comparison between the amount of environmental load and an amount of environmental load in a case where the facility is not introduced.

5. The environment contribution effect report generation apparatus according to claim 1, wherein
the report describes environmental value in a case where the environmental value is purchased, and evidence information (D71, D91, 731d, 931d) on the environmental value.

6. The environment contribution effect report generation apparatus according to claim 1, wherein
the report describes information on a ground for calculating the amount of environmental load.

7. The environment contribution effect report generation apparatus according to claim 1, wherein
the report describes a chronological change every predetermined period as an analysis result.

8. The environment contribution effect report generation apparatus according to claim 1, wherein
in a case where a target value is set for the amount of environmental load caused by the introduced facility, the report describes both the amount of environmental load and the target value.

9. An environment contribution effect report generation apparatus for generating a report on an environment contribution effect produced by introduction of an electric vehicle (EV),
the environment contribution effect report generation apparatus comprising:
an environmental load intensity acquisition unit (20) configured to identify and acquire an amount of environmental load caused in generating electricity used by the EV per unit amount and evidence information (D71, D91, 731d, 931d) on the amount of environmental load, from a charging history (D32) of the EV; and
an environment contribution effect report generation unit (19) configured to calculate an environment contribution effect from an environmental load intensity and a charge amount (332d) of the EV and to generate a report containing the environment contribution effect and the evidence information (D71, D91, 731d, 931d).

10. The environment contribution effect report generation apparatus according to claim 9, wherein
the environment contribution effect report generation unit (19) traces a source of electricity used by the EV, and the report explicitly describes the source of electricity.

11. An environment contribution effect report generation apparatus for generating a report on an environment contribution effect produced by introduction of an electric vehicle (EV),
the environment contribution effect report generation apparatus comprising:
means for identifying, based on information about when and where the EV is charged, a carbon dioxide emission factor of charged electricity and evidence information (D71, D91, 731d, 931d);
means for calculating an amount of environmental load caused by the charge, from the carbon dioxide emission factor and an amount of the charged electricity;
means for calculating an environment contribution effect produced by the introduction of the EV, from a difference between the amount of environmental load caused by the charge and an amount of environmental load caused by use of a gasoline vehicle; and
means for generating an environment report containing the environment contribution effect and the evidence information (D71, D91, 731d, 931d).
